# EUROPEAN PATENT APPLICATION

(11) **EP 2 405 327 A1**
(43) Date of publication of application: **11.01.2012**
(21) Application number: 09841011.1
(22) Date of filing: 01.07.2009
(51) Int. Cl.: G06F 3/041

(54) **INTEGRATED TOUCH CONTROL DEVICE**

(30) Priority: 03.03.2009 CN 200910008092
(71) Applicant: TPK Touch Solutions Inc., Taipei City 106 (TW)
(72) Inventor: WANG, Ching-yi, Taoyuan County Taiwan 320 (CN); LIU, Chen-yu, Taoyuan County Taiwan 320 (CN)
(74) Representative: Berkkam, Ayfer
(86) International application number: PCT/CN2009/072589
(87) International publication number: WO 2010/099678

(57) **Abstract**

A touch device integrated with capacitive and resistive sensing operation includes a first substrate on which a first electrode pattern is formed and a second substrate on which a second electrode pattern is formed. The first and second electrode patterns are respectively connected to a microprocessor via a first scanning circuit and a second scanning circuit. When a user slightly touches a touch operation surface of the touch device, the touch device is set in a capacitive touch position detection mode. When the user forcibly depresses the touch operation surface of the touch device or carries out a hand writing input operation on the touch operation surface of the touch device, the touch device is set in a resistive touch position detection mode.

## Description

### FIELD OF THE INVENTION

The present invention relates to a touch device, and in particular to a touch device integrated with capacitive and resistive operation for being selectively operated in a capacitive touch position detection mode and a resistive touch position detection mode.

### BACKGROUND OF THE INVENTION

A resistive touch panel comprises an ITO (Indium-Tin-Oxide) film and a sheet of ITO glass, which are spaced from each other by a plurality of insulation spacers. When a touching object (such as a stylus) touches and depresses the ITO film, a local depression is formed, which makes a contact with the ITO glass located therebelow thereby inducing a variation of voltage, which, through conversion from analog signal into digital signal, is applied to a microprocessor to be processed for calculation and determination of the operation position of the touched point.

A capacitive touch panel generally makes use of variation of electrical capacity coupling between a transparent electrodes and a conductor to generate an induced current by which the operation position of a touched point can be determined. In the structure of the capacitive touch panel, the outermost layer is a thin transparent substrate, and the second layer is an ITO layer. When a touching object (such as a user's finger) is put in touch with the surface of the transparent substrate, the touching object induces electrical capacity coupling with the electric field on the outer conductive layer, leading to a minute variation of current. A microprocessor may then perform calculation to determine the operation position where the figure touches.

### SUMMARY OF THE INVENTION

However, the resistive touch panel and the capacitive touch panel both suffer certain limitations on the operations thereof and have drawbacks. The resistive touch panel, although having an advantage of low cost, needs to cause physical contact between two conductive layers on the upper and lower sides in the operation thereof. Thus, a pressure must be applied to quite an extent. This often leads to damage of the conductive layers. Also, the sensitivity is low. On the other hand, although having high sensitivity, a capacitive touch panel, due to the operation principle thereof, must be operated with a touching object that is a conductor, such as a user's finger or a touch head, in order to conduct electric current therethrough. The capacitive touch panel cannot be operated with an insulative touching object.

Thus, an objective of the present invention is to provide a touch device integrated with capacitive and resistive operation, which detects the ways how a user touches the touch device and in response thereto, switches the operation thereof between capacitive and resistive touch position detection modes. Thus, when a user slightly touches a touch operation surface of the touch device, the touch device operates in the capacitive touch position detection mode, and when the user forcibly depresses the touch operation surface of the touch device or carries out a hand writing input operation on the touch operation surface of the touch device, the touch device operates in a resistive touch position detection mode.

The technical solution that the present invention adopts to overcome the above discussed problems is a touch device integrated with capacitive and resistive sensing operation, which comprises a first substrate on which a first electrode pattern is formed and a second substrate on which a second electrode pattern is formed. The first and second electrode patterns are respectively connected to a microprocessor via a first scanning circuit and a second scanning circuit.

When a user slightly touches a touch operation surface of the touch device, the touch device is set in a capacitive touch position detection mode in which a change of electrical capacitive coupling between the touching object and the first electrode pattern is applied to the microprocessor for determination of at least one operation position where the touching object operates on the touch operation surface of the first substrate.

When the user forcibly depresses the touch operation surface of the touch device or carries out a hand writing input operation on the touch operation surface of the touch device, the first substrate is depressed at an operation position, causing the first electrode pattern and the second electrode pattern to contact each other, whereby the touch device is set in a resistive touch position detection mode in which the microprocessor determines at least one operation position where the touching object operates on the touch operation surface of the first substrate according to variation of voltage in the second electrode pattern.

With the technical solution adopted in the present invention, the touch device integrated with capacitive and resistive operation in accordance with the present invention, together with a simple circuit structure, when integrated with a simple scanning detection process, is operable in the touch operation mode of either a capacitive touch panel or a resistive touch panel. Constraint in the touching object usable in the conventional resistive touch panel or the capacitive touch panel can be eliminated and the touch control operation of the touch device is simplified. The touch device can be selectively operated in the best touch control mode in accordance with different ways of operation and possesses the advantages of the touch panels of both types.

The present invention is also particularly suitable in the applications where hand writing input is applied to the touch device to effectively solve the problems of unsmooth hand writing input and poor detection result found in the conventional capacitive touch panels.

### BRIEF DESCRIPTION OF THE DRAWINGS

The present invention will be apparent to those skilled in the art by reading the following description of preferred embodiments thereof with reference to the drawings, in which:

**Figure 1** shows a system block diagram of a first embodiment in accordance with the present invention;

**Figure 2** shows an exploded view of major constituent components of **Figure 1****;**

**Figure 3** shows relative positional relationship between a first electrode pattern and a second electrode pattern after a first substrate and a second substrate of **Figure 1** are bonded together;

**Figure 4** shows a cross-sectional view taken along line **4-4** of **Figure 3****;**

**Figure 5** schematically demonstrates a touch device in accordance with the present invention being operated by a user's finger;

**Figure 6** shows a table listing capacitance corresponding to a touched position demonstrated in **Figure 5****;**

**Figure 7** schematically shows the touch device in accordance with the first embodiment of the present invention being operated with a touching object;

**Figure 8** shows a system block diagram of a second embodiment in accordance with the present invention;

**Figure 9** shows a circuit diagram demonstrating a depression operation applied to the touch device of the second embodiment of the present invention;

**Figure 10** shows an equivalent circuit of **Figure 9****;** and

**Figure 11** schematically shows the touch device in accordance with the second embodiment of the present invention being operated with a touching object.

### DETAILED DESCRIPTION OF THE PREFERRED EMBODIMENTS

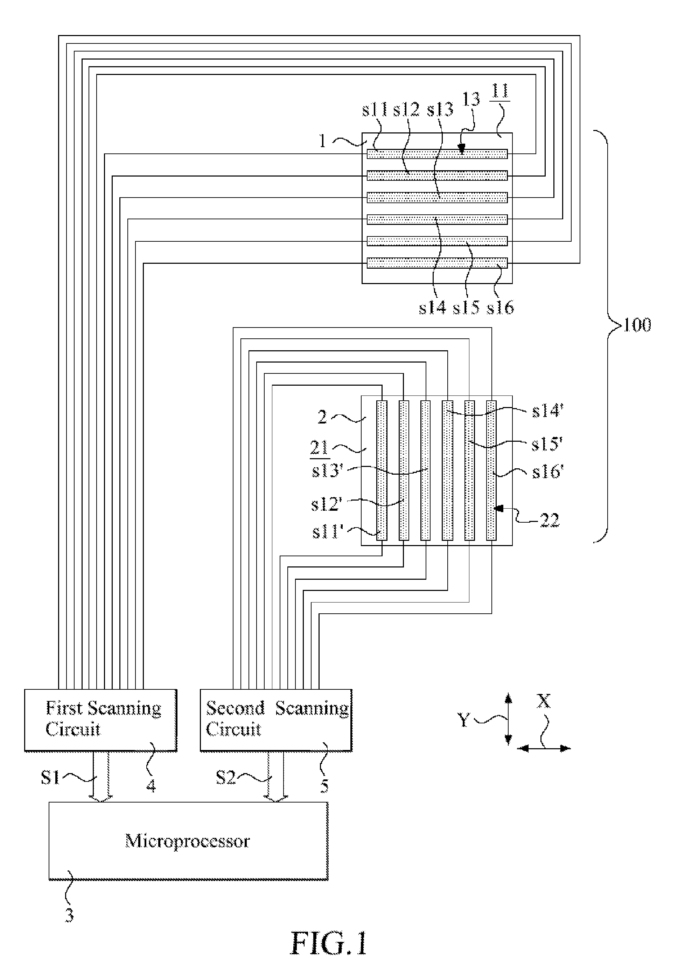

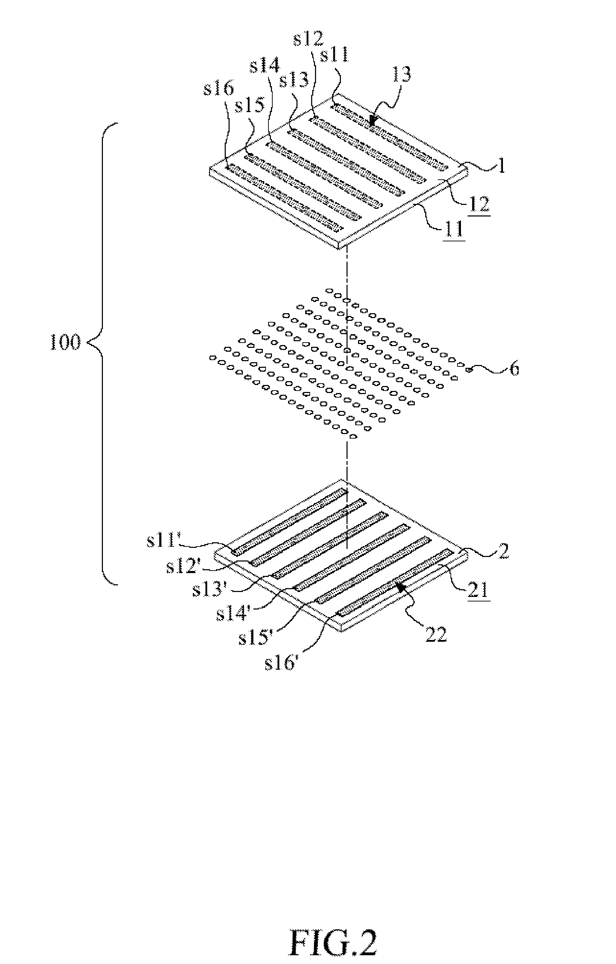

With reference to the drawings and in particular to **Figures 1** and **2****,** a system block diagram of a first embodiment in accordance with the present invention is illustrated. **Figure 2** shows an exploded view of major constituent components of **Figure 1****.** As shown, a touch device integrated with capacitive and resistive sensing operation in accordance with the present invention, generally designated at **100,** comprises a first substrate **1,** which comprises an insulation film, such as a PET (Polyethylene Terephthalate) film, of which a transparent material can be selected in a practical application. The first substrate **1** comprises a first electrode bonding surface **11** and a touch operation surface **12.** The first electrode bonding surface **11** of the first substrate **1** forms a first electrode pattern **13.** The first electrode pattern **13** comprises a plurality of strip-like electrodes **s11**, **s12, s13, s14, s15, s16,** which are substantially parallel to and spaced from each other by a given distance and extend along a first axis **X.** The first electrode pattern **13** is primarily made of electrically conductive material. The electrically conductive substance can be for example ITO (Indium Tin Oxide), which forms a transparent electrically-conductive layer.

The strip-like electrodes **s11**, **s12, s13, s14, s15, s16** are connected via a first scanning circuit **4** to a microprocessor **3** to be controlled by the microprocessor **3** so that a predetermined driving voltage can be applied to the strip-like electrodes **s11**, **s12, s13, s14, s15, s16,** or alternatively, the first scanning circuit **4** carries out scanning to detect the variation of electrical capacitive coupling of the strip-like electrodes **s11**, **s12, s13, s14, s15, s16** and issues a scanning detection signal **S1** obtained thereby to the microprocessor **3** for subsequent processing.

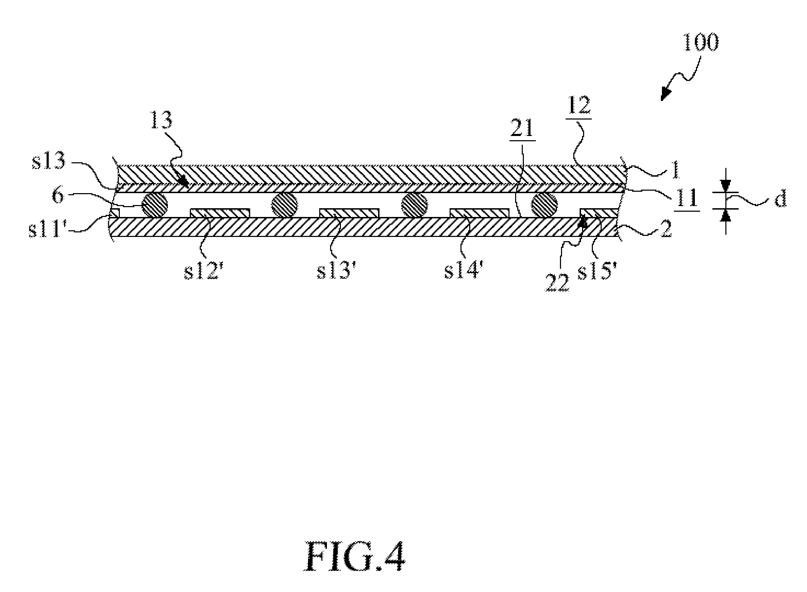

A second substrate **2** comprises a second electrode bonding surface **21** opposing the first electrode bonding surface **11** of the first substrate **1..** The second electrode bonding surface **21** of the second substrate **2** forms thereon a second electrode pattern **22.** The second electrode pattern **22** comprises a plurality of strip-like electrodes **s11', s12', s13', s14', s15', s16'**, which are substantially parallel to and are spaced from each other by a predetermined distance and extend along a second axis **Y.** The second substrate **2** is set at a location substantially opposing the first substrate **1** to have the second electrode pattern **22** facing the first electrode pattern **13.** A predetermined distance **d** is defined between the first electrode pattern **13** of the first substrate **1** and the second electrode pattern **22** of the second substrate **2** (as shown in **Figure 4****).**

The strip-like electrodes **s11', s12', s13', s14', s15', s16'** are connected via a second scanning circuit **5** to the microprocessor **3** for scanning and detecting variation of voltage occurring in each of the strip-like electrodes **s11', s12', s13', s14', s15', s16'** and a scanning detection signal **S2** is issued to the microprocessor **3** for subsequent processing. In practical applications, each strip-like electrode **s11', s12', s13', s14', s15', s16'** can be connected to the second scanning circuit **5** by one end or by both ends.

The strip-like electrodes **s11, s12, s13, s14, s15, s16** of the first electrode pattern **13** are formed on the first electrode bonding surface **11** of the first substrate **1** in an arrangement of being substantially parallel to and spaced from each other. On local areas between the first electrode pattern **13** and the second electrode bonding surface **21** of the second substrate **2** where no strip-like electrode **s11', s12', s13', s14', s15', s16'** is set, at least one insulation spacer **6** is provided. With the insulation spacers **6,** direct contact between the first electrode pattern **13** and the second electrode pattern **22** can be prevented.

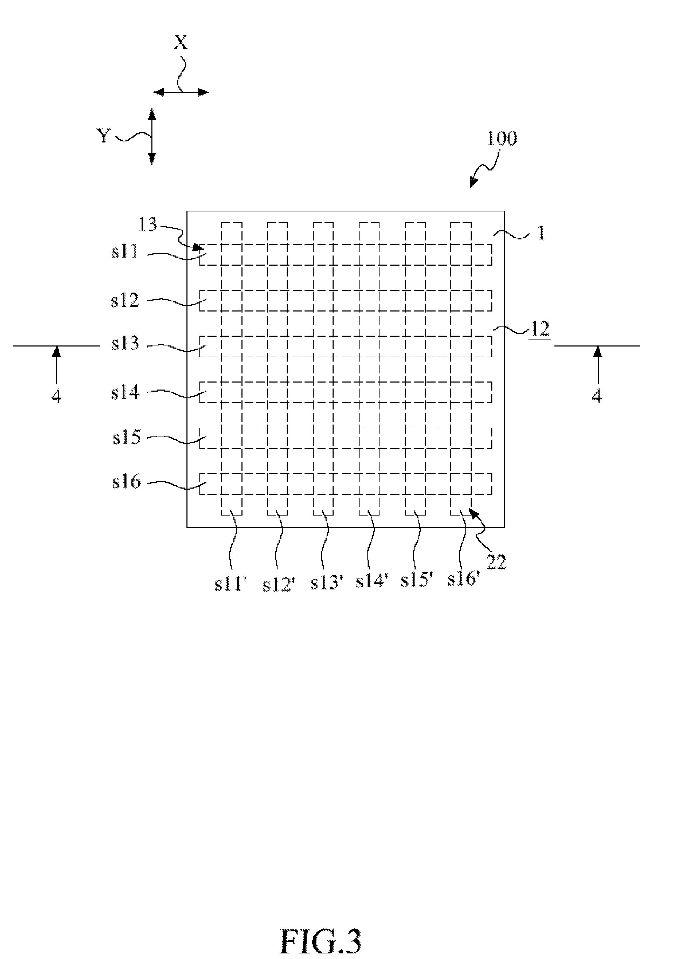

Referring to **Figure 3****,** which shows the relative positional relationship between the first electrode pattern **13** and the second electrode pattern **22** after the first substrate **1** is bonded to the second substrate **2,** in the embodiment illustrated, the first electrode pattern **13** and the second electrode pattern **22** are each illustratively comprised six strip-like electrodes, but it is apparent that the number of the strip-like electrodes is not limited to this and more or less strip-like electrodes can be employed. In a preferred embodiment of the present invention, the strip-like electrodes **s11, s12, s13, s14, s15, s16** of the first electrode pattern **13** and the strip-like electrodes **s11', s12', s13', s14', s15', s16'** of the second electrode pattern **22** are set in an right angle intersecting and overlapping arrangement.

Referring to **Figure 4****,** the first substrate **1** and the second substrate **2** sandwich therebetween a plurality of insulation spacers **6** to maintain a predetermined distance between the first substrate **1** and the second substrate **2** after they are bonded together, whereby direct contact between the first electrode pattern **13** of the first substrate **1** and the second electrode pattern **22** of the second substrate **2** can be prevented.

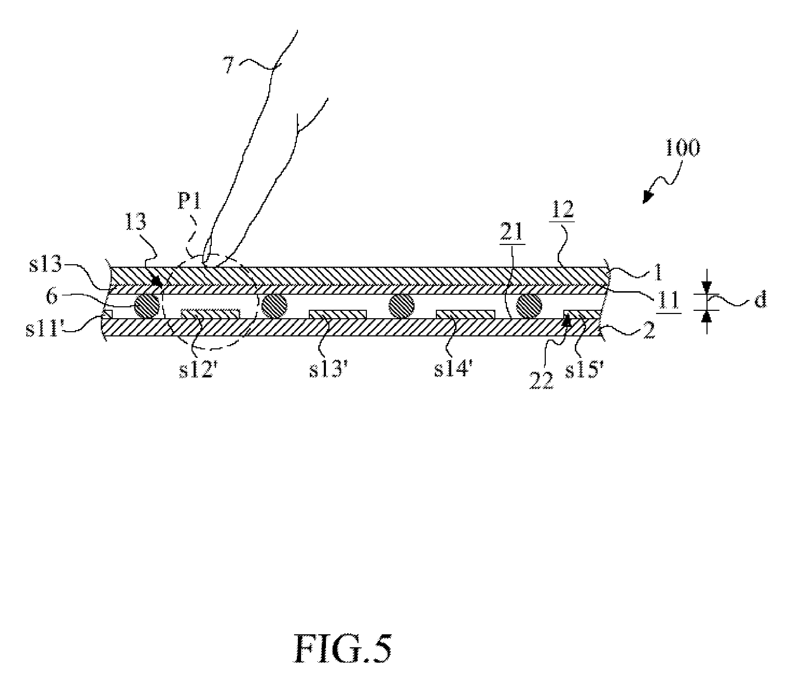

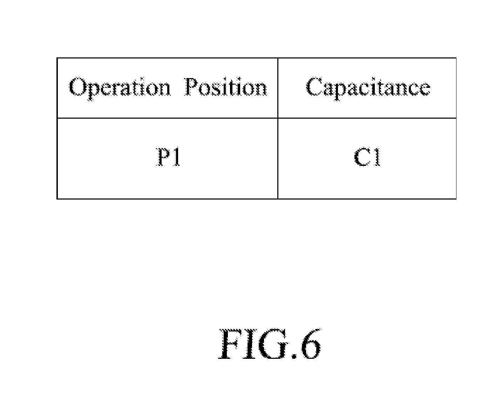

Referring to **Figures 5** and **6****,** **Figure 5** demonstrates the touch device of the present invention is operated by a user's finger and **Figure 6** shows a table listing the capacitance corresponding to each touch position demonstrated in **Figure 5****.** As shown, the example illustrated is used to explain the touch control operation applied to the touch device **100** by means of a touching object **7.**

Firstly, in the example illustrated, an operation position occurring at the intersection between the strip-like electrode **s13** of the first electrode pattern **13** and the strip-like electrode **s12'** of the second electrode pattern **22** is referred to as operation position **P1**. In the example illustrated, a touching object **7** that is employed to operate the touch device **100** can be for example a finger, a conductive object, or other suitable operating objects.

When the touching object **7** slightly touches a touched position on the touch operation surface **12** of the first substrate **1** to such an extent that the first electrode pattern **13** does not get into physical contact with the second electrode pattern **22** (such as the operation position **P1** shown in **Figure 5****),** under this condition, the touch device **100** is operated with a capacitive touch position detection mode, where the touching object **7** and the strip-like electrode **s13** of the first electrode pattern **13** induce a capacitance **C1** (see **Figure 6****)** therebetween due to electrical capacity coupling. The first scanning circuit **4,** through scanning each strip-like electrode **s11, s12, s13, s14, s15, s16** of the first substrate **1,** detects the variation of electrical capacity coupling between the touching object **7** and the first electrode pattern **13** and issues the first scanning detection signal **S1** to the microprocessor **3.**

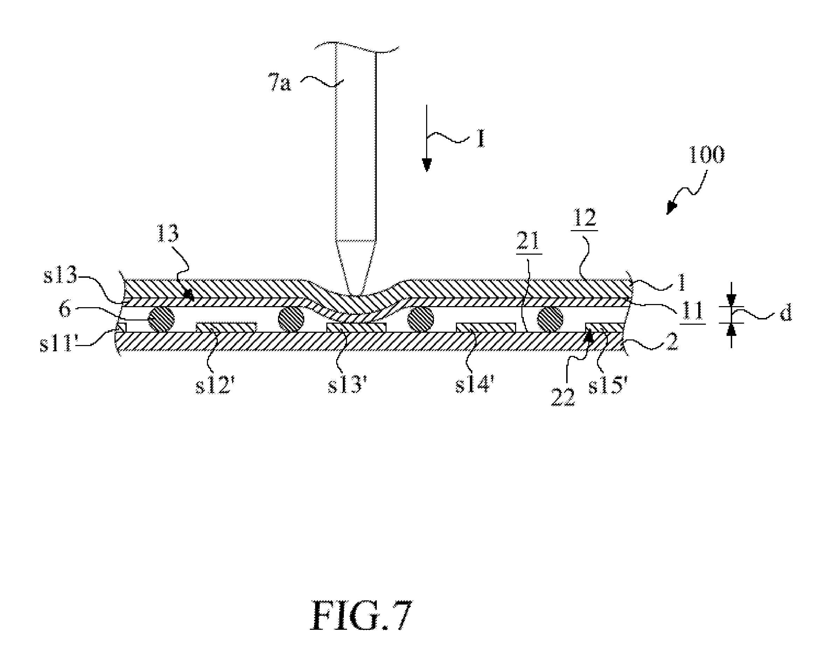

**Figure 7** is a schematic view illustrating that the touch device of the first embodiment of the present invention is operated with a touching object. As shown, a touching object **7a** used in the instant example is a conductive object or a non-conductive object (such as a touch stylus or other suitable objects). When the touching object **7a** depresses the touch operation surface **12** of the first substrate **1,** due to the depression of the first substrate **1** at the operation position, the strip-like electrode **s13** of the first electrode pattern **13** and the strip-like electrode **s13'** of the second electrode pattern **22** get into contact with each other (the predetermined distance **d** becoming **d**=**0**). Under this condition, the touch device **100** is operated with a resistive touch position detection mode, wherein a driving voltage is applied to the strip-like electrode **s13'** and the touch device **100** calculates the operation position of the touching object **7a** operating on the touch operation surface **12** of the first substrate **1** according to variation of voltage in the strip-like electrode **s13'** of the second electrode pattern **22.**

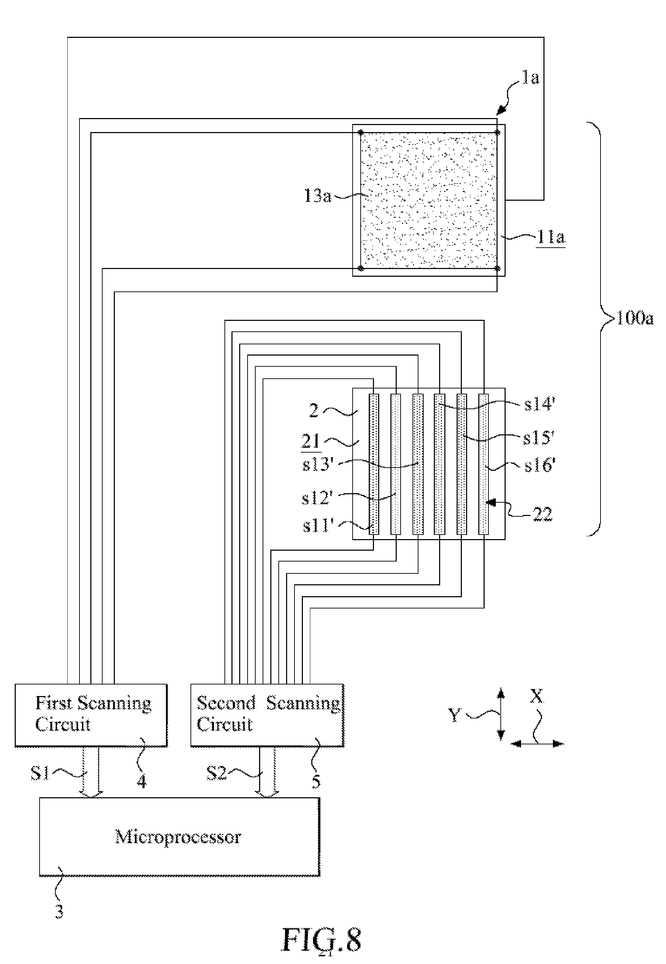

Referring to **Figure 8****,** which shows a system block diagram in accordance with a second embodiment of the present invention, the second embodiment comprises major constituent components that are identical to the counterparts of the first embodiment and the identical components are designated with the same reference numerals. A difference is that the second embodiment comprises a first substrate **1a** that has a first electrode bonding surface **11a** and the first electrode bonding surface **11a** forms thereon a first electrode pattern **13a** that comprises an ITO transparent conductive layer having a continuous planar structure. Four corners of the first electrode pattern **13a** are connected to the first scanning circuit **4** in order to allow a driving voltage to be applied thereto to form a voltage gradient in the first electrode pattern **13a**.

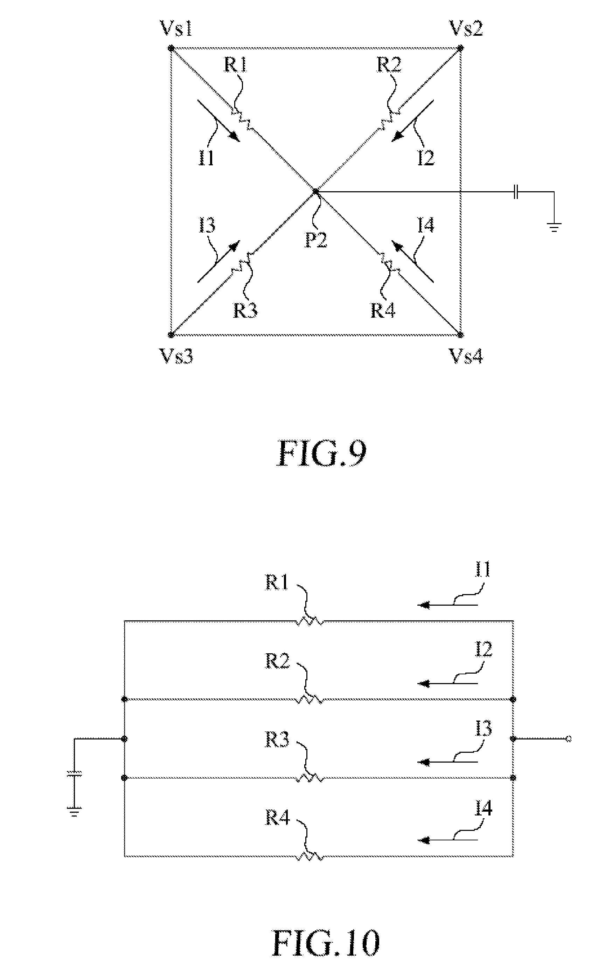

Referring to **Figures 9** and **10****,** which are respectively a circuit diagram demonstrating a depression operation applied to the touch device **100a** and an equivalent circuit thereof, as shown in **Figure 9****,** when the touch device **100a** is being depressed at an operation position **P2,** a resistance **R1**, **R2, R3, R4** is induced between the operation position **P2** and each corner. As shown in **Figure 9****,** based on the voltage **Vs1**, **Vs2, Vs3, Vs4** supplied and the corresponding resistance **R1**, **R2, R3, R4,** a corresponding current **I1, I2**, **I3**, **I4** can be calculated, and based on the ratio between the currents **I1**, **I2**, **I3**, **I4**, the location of the operation position **P2** on the touch device **100a** can be calculated.

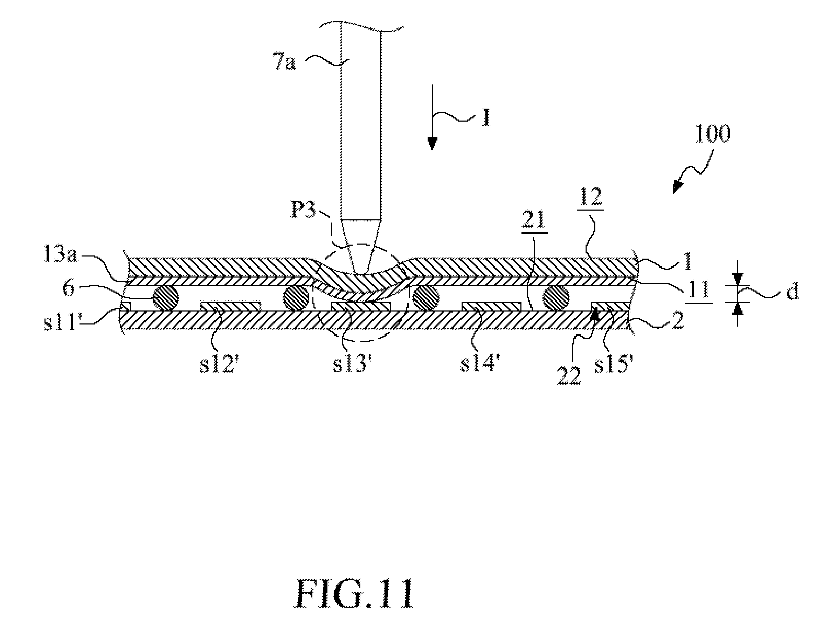

Referring to **Figure 11****,** which shows a schematic view of the touch device of the present invention being operated with a touching object, firstly, an operation position occurring at the intersection between the first electrode pattern **13a** and the strip-like electrode **s13'** of the second electrode pattern **22** is referred to as operation position **P3.** In the instant example, a touching object **7a** that is employed to operate the touch device **100a** can be a conductive object or a non-conductive object (such as a touch stylus or other suitable objects).

Also referring to **Figure 8****,** when a user uses the touching object **7a** to forcibly depress the first substrate **1a** in a given touching direction **I,** due to the depression of the first substrate **1a** at the operation position **P3,** the first electrode pattern **13a** and the strip-like electrode **s13'** of the second electrode pattern **22** get into contact with each other (the predetermined distance **d** becoming **d=0).** Under this condition, the touch device **100a** is operated with a resistive touch position detection mode, wherein the first scanning circuit **4** applies a driving voltage to the first electrode pattern **13a** and the driving voltage is transmitted from the first electrode pattern **13a** to the strip-like electrode **s13'** of the second electrode pattern **22.** The second scanning circuit **5** performs scanning and detection and then issues a scanning detection signal **S2** to the microprocessor **3.** The microprocessor **3** responds to the variation of voltage in the strip-like electrode **s13'** of the second electrode pattern **22** and calculates the touched position of the touching object **7a** on the first substrate **1.**

Although the present invention has been described with reference to the preferred embodiments thereof, it is apparent to those skilled in the art that a variety of modifications and changes may be made without departing from the scope of the present invention which is intended to be defined by the appended claims.

## Claims

1. A touch device adapted to detect a touch control movement that a touching object applied to the touch device, the touch device comprising:
a first substrate, which has a first electrode bonding surface and a touch operation surface;
a first electrode pattern, which is formed on the first electrode bonding surface of the first substrate;
a second substrate, which is arranged at a location opposing the first substrate and has a second electrode bonding surface facing the first electrode bonding surface of the first substrate, the first substrate and the second substrate being spaced from each other by a predetermined distance;
a second electrode pattern, which is formed on the second electrode bonding surface of the second substrate and opposes the first electrode pattern; and
a microprocessor, which is electrically connected to the first electrode pattern and the second electrode pattern;
wherein when the touching object slightly touches the touch operation surface of the first substrate, the touch device is set in a capacitive touch position detection mode in which a change of electrical capacitive coupling between the touching object and the first electrode pattern is applied to the microprocessor for determination of at least one operation position where the touching object operates on the touch operation surface of the first substrate; and
wherein when the touching object forcibly depresses the touch operation surface of the first substrate or when a hand writing input operation is performed on the touch operation surface of the first substrate, the first substrate is depressed at an operation position, causing the first electrode pattern and the second electrode pattern to contact each other, whereby the touch device is set in a resistive touch position detection mode in which the microprocessor determines at least one operation position where the touching object operates on the touch operation surface of the first substrate according to variation of voltage in the second electrode pattern.

2. The touch device as claimed in Claim 1, wherein the first electrode pattern and the second electrode pattern each comprise a plurality of strip-like electrodes that are parallel to and spaced from each other.

3. The touch device as claimed in Claim 2, wherein the strip-like electrodes of the first electrode pattern are connected to the microprocessor via a first scanning circuit and wherein the strip-like electrodes of the second electrode pattern are connected to the microprocessor via a second scanning circuit.

4. The pressure detectable touch device as claimed in Claim 2, wherein the first electrode pattern and the conductive layer are spaced from each other by insulation spacers.

5. The touch device as claimed in Claim 1, wherein the first electrode pattern comprises a continuous planar structure and wherein the second electrode pattern comprises a plurality of strip-like electrodes that are parallel to and spaced from each other.

6. The touch device as claimed in Claim 5, wherein the first electrode pattern is connected to the microprocessor via a first scanning circuit and wherein the strip-like electrodes of the second electrode pattern are connected to the microprocessor via a second scanning circuit.

7. The pressure detectable touch device as claimed in Claim 5, wherein the first electrode pattern and the conductive layer are spaced from each other by insulation spacers.
